# EUROPEAN PATENT SPECIFICATION

(11) **EP 1 836 340 B1**
(45) Date of publication and mention of the grant of the patent: **22.02.2012**
(21) Application number: 05821612.8
(22) Date of filing: 02.12.2005
(51) Int. Cl.: D06F 37/30

(54) **A WASHER / DRYER**
WASCHTROCKNER
LESSIVEUSE-SECHEUSE

(30) Priority: 24.12.2004 TR 200403609
(43) Date of publication of application: 26.09.2007
(73) Proprietor: Arçelik Anonim Sirketi, 34950 Istanbul (TR)
(72) Inventor: TEZDUYAR, Latif Arcelik Anonim Sirketi, 34950 Istanbul (TR); DIRIL, Orhan Arcelik Anonim Sirketi, 34950 Istanbul (TR); SONMEZOZ, Fehmi Arcelik Anonim Sirketi, 34950 Istanbul (TR); AVCI, Korkut Arcelik Anonim Sirketi, 34950 Istanbul (TR)
(86) International application number: PCT/IB2005/054030
(87) International publication number: WO 2006/067649

(56) References cited:
- US-A- 3 604 222

## Description

This invention relates to a washer / dryer comprising a drum whereby washing is performed as it rotates about its axis and an electric motor which is composed of components positioned on the tub in which said drum moves.

Traditionally, regarding front-loaded washers / dryers, several direct-driven washers / dryers are available wherein the drum is activated by means of stators and rotors located at the rear surfaces of the drum and the tub.

In the current state-of-the-art, in the United States Patent Document US 3604222, a description is given of a washing machine comprising a drum, a tub and an electric motor comprising a rotor composed of magnetic materials located on the drum at equal distance intervals and, a stator positioned on the tub.

In the current state-of-the-art, in the International Patent Application WO 04/059066, a description is given of a washer / dryer comprising a drum whereby washing is performed as it rotates about its axis and a stator positioned on the tub in which said drum moves, and a brushless asynchronous motor whereby it is achieved to drive the drum by means of the rotor.

In the current state of the art, in the International Patent Application WO 03/018898, a description is given of a motor for washers wherein its circular shaped stator and rotor are positioned on the tub and drum.

The aim of the present invention is the realization of a washer / dyer driven by a brushless direct current motor which comprises a rotor positioned around the drum and a stator positioned on the tub and, the speed of which can be adjusted by determining the positions of rotor magnets.

This aim can be achieved by a washer/dryer according to claim 1. Embodiments of the present invention will now be described, by way of example, with reference to the attached figures, where:

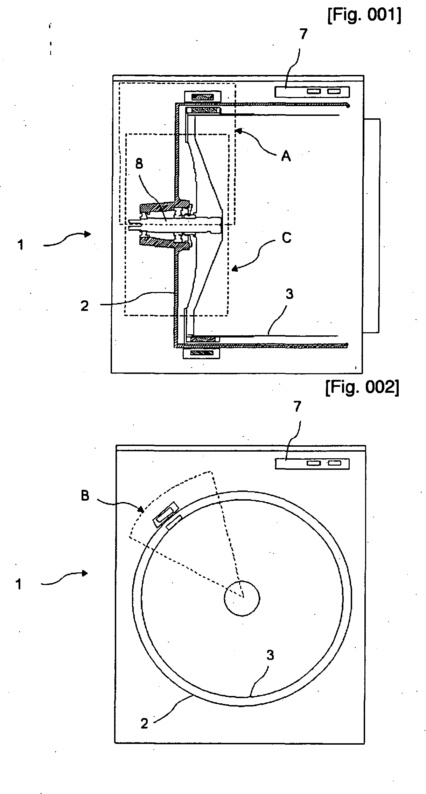

Fig. 1 - is a side schematic view of a washer / dryer.

Fig.2 - is a front schematic view of a washer / dryer.

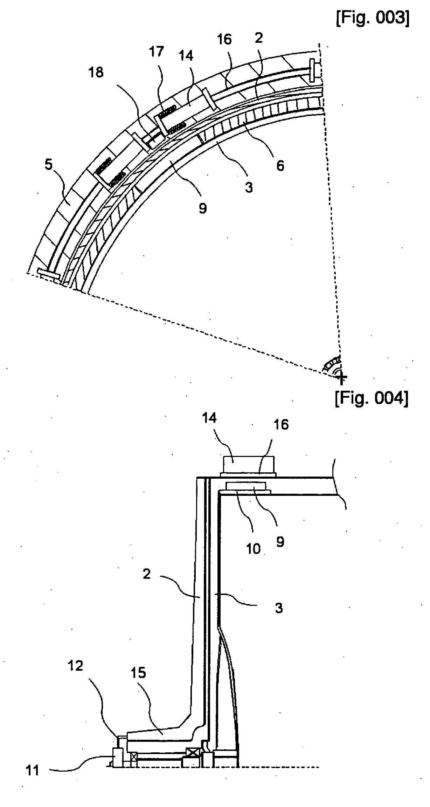

Fig.3 - is a schematic view of detail B in Figure 2 illustrating a washer / dryer which comprises a stator positioned on the tub and a rotor positioned on the drum.

Fig.4 - is a schematic view of detail A in Figure 1 illustrating a washer / dryer which comprises a stator positioned on the tub and a rotor positioned on the drum.

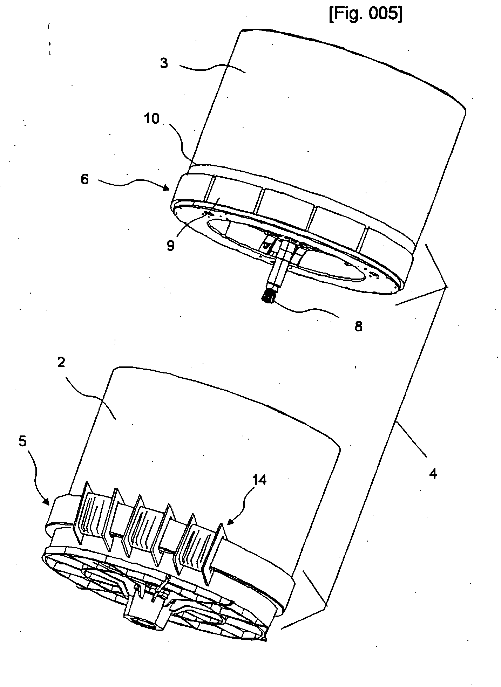

Fig.5 - is a perspective view of a tub with a stator positioned thereon and a drum with a rotor positioned thereon, before mentioned drum is placed into the tub.

Fig.6 - is a schematic view of detail C in Figure 1 illustrating a washer / dryer which comprises a shaft positioned into its housing on the tub and a model magnet group.

Fig.7 - is a schematic view of detail D in Figure 6.

Fig.8 - is an electronic circuit diagram controlling a motor.

Elements shown in figures are numbered as follows:
1. Washer / dryer
2. Tub
3. Drum
4. Motor
5. Stator
6. Rotor
7. Motor control module
8. Shaft
9. Rotor magnet
10. Rotor yoke
11. Model magnet
12. Sensing device
13. Model magnet group
14. Bobbin
15. Bearing bushing
16. Stator yoke
17. Coil
18. Stator intermediate piece

Washers / dryers (1) comprise a drum (3) in which laundry to be washed is placed and which is able to move by rotating about an axis, a tub (2) in which said drum (3) moves, a brushless motor (4) whereby the drum (3) is activated and, a motor control module (7) by means of which mentioned motor (4) is controlled.

The motor (4) comprises a stator (5) positioned on the tub (2) in a proper way with respect to the shape of the tub (2) and, a rotor (6) positioned on the drum (3) so as to face the stator (5) inside the magnetic field to be created between them. When the stator (5) is driven by feeding wave forms depending on the position of the rotor (6), a magnetic field is created as a result of the current that passes therethrough, wherein said magnetic field enables the rotor (6) which is not supplied with network voltage to move.

The rotor (6) comprises one or more than one rotor yokes (10) made of a highly magnetic material whereon said rotor magnet (9) is positioned and one or more than one rotor magnet (9), which is in a suitable form with respect to the shape of the drum (3) and the tub (2), and which is positioned on the mentioned drum (3) such that an approximately equal air gap is left between the drum (3) and the tub (2).

The stator (5) comprises one or more stator yokes (16), for instance in form of a ring, encircling the tub (2) so as to surround it, one or more bobbins (14) positioned thereon in such a way to cover the mentioned stator yoke (16), one or more coils (17) formed by winding conductor wires with a proper number, length and diameter with respect to the desired motor (4) power, around the bobbin (14) and, one or more stator intermediate pieces (18) located between the stator yoke (16) and the tub (2) and bobbins (14) and whereby flux losses are reduced via its magnetic conductor material structure.

The drum (3) comprises a shaft (8) enabling it to rotate about its axis and a drum yoke housing where the rotor yoke (10) is fitted.

The tub (2) comprises one or more bearing bushings (15) whereby the afore-mentioned shaft (8) is guided.

The washer / dryer (1) comprises a model magnet group (13) which is located outside the tub (2) and the drum (3) such that it is not affected by such working conditions as humidity and temperature inside the tub (2) and the drum (3) and that it does not harm the user while the motor (4) is operating and, whereby it is achieved to sense the positioning of the rotor magnets (9) on the drum (3) and thus be able to control the motor (4).

The model magnet group (13) comprises a model magnet (11) that is positioned on the end portion of the shaft (8), the end portion of which is outside the tub (2) as if it is a model of the rotor magnets (9) suitable in quantity and angle and, whereby the positions of the rotor magnets (9) in motion located on the drum (3) are determined and, one or more sensing devices (12) used to determine the positions of the rotor magnets (9) by sensing the positioning of model magnets (11) and positioned so as to see the model magnets (11) moving together with the shaft (8) and sense their positions, preferably onto the tub (2).

In the preferred embodiment of the present invention, in the washer / dryer (1), number of model magnets (11) utilized is the same as of the rotor magnets (9).

In the embodiment which is the object of the present invention, first, the tub (2) with a stator (5) positioned thereon and the drum (3) with a rotor (6) positioned thereon are prepared and then, the motor (4) is formed by assembling so that the drum (3) is placed into the tub (2).

While mounting the drum (3), rotor magnets (9) are placed side by side so as to make sure that the air gap between the tub (2) and them is fixed, to the rotor yoke (10) which is formed by plates made of such materials as Copper, Aluminum, stainless or silica steel with highly magnetic characteristics and very little corrosion proneness. Moreover, a number of model magnets (11) determined with respect to the motor (4) power to be applied are positioned on the shaft (8) at the same angular position and having the same number of poles with the rotor magnets (9).

While mounting the tub (2), bobbins (14) are prepared by means of coils (17) with a quantity, diameter and length determined with respect to the desired motor (4) power and, prepared bobbins (14) are positioned on the stator yoke (16) in accordance with the desired motor (4) power and the number of phases to be applied. After the stator intermediate pieces (18) are placed between the bobbins (14) and under the rotor yoke (10), bobbins (14) are connected to each other and to the network through the motor control module (7), according to the number of phases.

After the drum (3) is mounted into the tub (2), the sensing device (12) is fastened onto the tub (2) at such a position and shape to check the model sensing device magnets (11) attached onto the shaft (8) wherein it is connected with the motor control module (7).

In the embodiment which is the object of the present invention, the magnetic field created by means of rotor magnets (9) as the voltage obtained from the network is supplied through the motor control module (7) with respect to the position of the rotor (6) on the drum (3), enables the drum (3) to rotate inside the tub (3) and about the shaft (8).

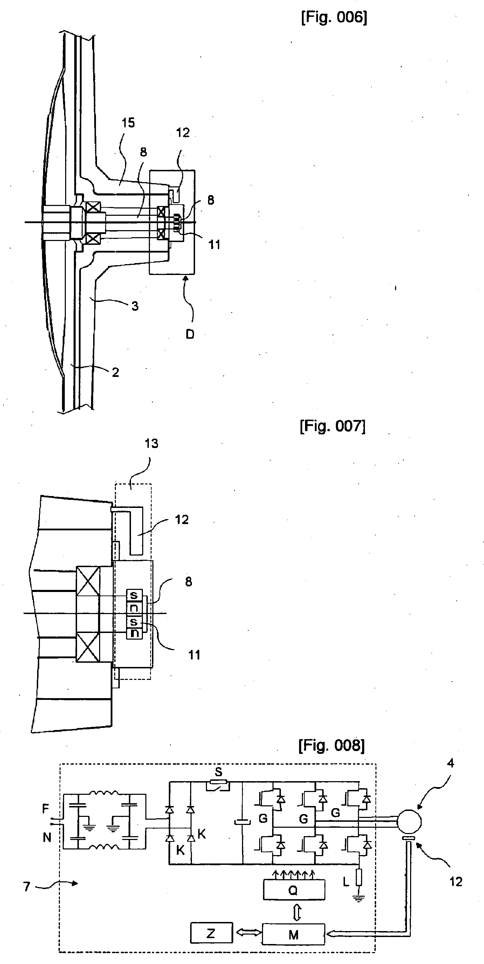

The voltage supplied from the network as neuter (N) and phase (F) reaches the motor (4) as it is allowed to pass through one or more diodes (K) and is controlled by a capacitor charge current limiter (S), via power switches (W) that are separated or modular according to the phases. While operating the motor (4), DSP microprocessor (M) controls the power switches (G) by means of an interface and a driver, for instance a MOS Gate Driver, with respect to the positioning information detected by the sensing device (12) and thereby, it is achieved to operate the motor (4) at a desired phase and speed. Meanwhile, the lower potential of a DC link (L) is utilized as ground (Figure 8).

The sensing device (12) detects the positions of the rotor magnets (9) at a certain order, number and angle by means of model sensing device magnets (11) having the same order, number and angle as the rotor magnets (9), wherein model sensing device magnets (11) move in a circular path around a common central axis with the circular shaped drum (3) and are positioned on the shaft (8) which is attached to the drum (3) and which has a circular shape with a smaller diameter than that of the drum (3) and, it transfers the information to the motor control module (7). Whereas the motor control module (7) drives the power switches (G) with respect to the afore-mentioned information and to the phase difference and, ensures that the motor (4) is operated at a desired speed and moment.

The brushless motor (4) that is capable of operating with various connection types such as monophase and multi-phase, has one or more double poles and can be controlled by various control methods such as DC control, AC control, vectorial control or torque control.

The speed is adjusted by changing the amplitude and the direction of the voltage on the stator (5), which is supplied through the motor control module (7). Thermal protection and controlling unstable and/or excessive loads are achieved by tracing the stator (5) currents and the variables in the control cycle.

In the embodiment, which is the object of the present invention, a sensor is utilized as the sensing device (12).

In another embodiment of the present invention, a microcontroller with high processing power is utilized as the sensing device (12).

In yet another embodiment of the present invention, a DSP microprocessor (M) with high processing power is utilized as the sensing device (12).

In yet another embodiment of the present invention, in the washer / dryer (1), model magnets (11) are utilized at a number as integer multiples of the number of the rotor magnets (9) and phases.

In one embodiment of the present invention, where one frequency and one double pole are utilized, the washer / dryer (1) is operated at a single speed through the voltage obtained from the network whether the motor control module (7) is utilized.

In yet another embodiment of the present invention, one or more shields made of plastic material, preferably covering the stator (5) completely, is utilized, wherein the shield prevents the washer / dryer (1) and / or users from being affected by the voltages on the stator (5) and model magnet group (13) or by possible electric leaks and, the stator (5) from being damaged by the working and operating conditions such as humidity.

In yet another embodiment of the present invention, such corrosion prone materials as iron located inside the rotor (6) that is in contact with the washing water, are covered with a material which does not prevent the formation of a magnetic field, for instance plastic, in order for the mentioned materials not to corrode inside the washer / dryer (1) and damage the laundry inside the washer / dryer (1).

While the motor (4) is operating, there is solely a magnetic field inside the drum (3) whereas the electric current is just on the stator (5) located on the electrically insulated tub (2) wherein it is accomplished to prevent the user from being harmed.

With the embodiment which is the object of the present invention, by means of a motor (4) the power of which can be changed by adding or removing bobbins (14) and motion patterns of which are flexible, it is achieved to reach high speeds and at high drying speeds, to be able to choose and utilize middle end coils which are to function at high speeds.

As a result of its heavy structure, the actuating rotor (6) also contributes to form a more stable dynamic system and to reduce the quantity of balance weights used within the dynamic structure of the washer / dryer (1). Thereby, as a consequence of high inertia, it is achieved to contribute to the natural attenuation of unbalanced loads and to obtain a considerably low noise level due to operation, by means of the fact that the rotor (6) is coupled to the drum (3) and is inside the tub (2) and the large air gap.

Another advantage of the embodiment of the present invention is that the manufacturer is allowed to have a flexible design depending on the desired capacity. Thereby, the manufacturer is enabled to design so as to fulfill the drive needs of various models (capacity; liter - speed) with the same geometry by changing the number and position of bobbins (14), magnet poles and / or coils (17) and, to easily produce the motor (4) with a desired power.

## Claims

1. A washer / dryer (1) comprising ; a drum (3) into which laundry to be washed is placed and which is able to move by rotating about an axis and has a shaft (8) enabling it to rotate about its axis ; a tub (2) in which said drum (3) moves; a motor (4) which has a stator (5) positioned on the tub (2) in a proper way with respect to the shape of the tub (2) and, a rotor (6) positioned so as to face the stator (5) inside the magnetic field to be created between them, wherein the rotor (6) comprises one or more rotor magnets (9) in a suitable form with respect to the shape of the drum (3) and the tub (2), and wherein the rotor magnet (9) is positioned on the mentioned drum (3) such that an equal or approximately equal air gap is left between the drum (3) and the tub (2) and ; a motor control module (7) by means of which mentioned motor (4) is controlled; **characterized by** a model magnet group (13) located outside the tub (2) and the drum (3) such that it is not affected by such working conditions as humidity and temperature inside the tub (2) and the drum (3) and that it does not harm the user while the motor (4) is operating and, whereby it is achieved to sense the positioning of the rotor magnets (9) on the drum (3) and thus to control the motor (4).

2. A washer / dryer (1) as described in Claim 1, **characterized by** model magnets (11) that are positioned on the end portion of the shaft (8) the end portion of which is outside the tub (2) as if it is a model of the rotor magnets (9) suitable with their quantity and angle and, whereby the positions of the rotor magnets (9) located on the drum (3) in motion are determined.

3. A washer / dryer (1) as described in Claims 1 to 2, **characterized by** one or more than one sensing device (12) used to determine the positions of the rotor magnets (9) by sensing the positioning of model magnets (11) and positioned onto the tub (2) so as to sense the model magnets (11) moving together with the shaft (8).

4. A washer / dryer (1) as described in Claims 1 to 3, **characterized by** a stator (5) comprising one or more stator yokes (16) encircling the tub (2), more than one bobbins (14) positioned thereon in such a way to cover the mentioned stator yoke (16), coils (17) the same number as bobbins (14), where coils (17) are formed by winding conductor wires with a proper number, length and diameter with respect to the desired motor (4) power, around the bobbin (14) and, one or more stator intermediate pieces (18) located between the stator yoke (16) and the tub (2) and between the two bobbins (14) whereby flux losses are reduced via its magnetic conductor material structure.

5. A washer / dryer (1) as described in Claims 1- 4, **characterized by** a rotor (6) which comprises one or more rotor yokes (10) made of a highly magnetic material whereon the rotor magnet (9) is positioned.

6. A washer / dryer (1) as described in any of the Claims 2 to 5, **characterized by** model magnets (11) that are of the same number as the rotor magnets (9).

7. A washer / dryer (1) as described in any of the Claims 2 to 6, **characterized by** model magnets (11) which are utilized at a number as integer multiples of the number of the rotor magnets (9) and phases and by rotor magnets (9).

## Patentansprüche

1. Wasch-/Trockenmaschine (1), umfassend
eine Trommel (3), in die die zu waschende Wäsche gelegt wird und die sich bewegen kann, indem sie sich um eine Achse dreht, und eine Welle (8) aufweist, die es ihr ermöglicht, sich um ihre Achse zu drehen,
einen Waschbehälter (2), in dem sich die genannte Trommel (3) bewegt, einen Motor (4), der einen Stator (5) aufweist, der am Waschbehälter (2) in Bezug auf die Form des Waschbehälters (2) geeignet angeordnet ist, und einen Rotor (6), der derart angeordnet ist, dass er dem Stator (5) in dem Magnetfeld, das zwischen ihnen erzeugt wird, zugewandt ist, wobei der Rotor (6) einen oder mehrere Rotormagnete (9) von geeigneter Form in Bezug auf die Form der Trommel (3) und des Waschbehälters (2) umfasst, und wobei der Rotormagnet (9) derart an der genannten Trommel (3) angeordnet ist, dass ein gleicher oder annähernd gleicher Luftspalt zwischen der Trommel (3) und dem Waschbehälter (2) bestehen bleibt, und
ein Motorsteuerungsmodul (7), mit dessen Hilfe der Motor (4) gesteuert wird, **gekennzeichnet durch** eine Modellmagnetgruppe (13), die außerhalb des Waschbehälters (2) und der Trommel (3) angeordnet ist, derart, dass sie nicht von Arbeitsbedingungen wie Feuchtigkeit und Temperatur im Waschbehälter (2) und in der Trommel (3) beeinflusst wird und den Benutzer nicht verletzt, während der Motor (4) in Betrieb ist, und wodurch ermöglicht wird, die Positionierung der Rotormagnete (9) an der Trommel (3) zu messen und auf diese Weise den Motor (4) zu steuern.

2. Wasch-/Trockenmaschine (1) nach Anspruch 1, **gekennzeichnet durch** Modellmagnete (11), die am Endabschnitt der Welle (8) angeordnet sind, deren Endabschnitt außerhalb des Waschbehälters (2) angeordnet ist, und die mit ihrer Menge und ihrem Winkel geeignet sind, ein Modell der Rotormagnete (9) zu sein, und wodurch die Positionen der Rotormagnete (9), die an der Trommel (3) angeordnet sind, bestimmt werden.

3. Wasch-/Trockenmaschine (1) nach den Ansprüchen 1 bis 2, **gekennzeichnet durch** eine oder mehrere Messvorrichtungen (12), die dazu benutzt werden, die Positionen der Rotormagnete (9) zu bestimmen, indem sie die Positionierung von Modellmagneten (11) messen, und die an dem Waschbehälter (2) angeordnet sind, um die Modellmagnete (11) zu messen, die sich zusammen mit der Welle (8) bewegen.

4. Wasch-/Trockenmaschine (1) nach den Ansprüchen 1 bis 3, **gekennzeichnet durch** einen Stator (5), umfassend ein oder mehrere Statorjoche (16), die den Waschbehälter (2) umgeben, mehr als einen Spulenträger (14), die derart daran angeordnet sind, dass sie das genannte Statorjoch (16) abdecken, Spulen (17) in der gleichen Zahl wie die Spulenträger (14), wobei Spulen (17) **durch** das Aufwickeln von Leiterdrähten in einer geeigneten Anzahl, geeigneten Länge und einem geeigneten Durchmesser in Bezug auf die gewünschte Leistung des Motors (4) um den Spulenträger (14) gebildet sind, und ein oder mehrere Statorzwischenstücke (18), die zwischen dem Statorjoch (16) und dem Waschbehälter (2) und zwischen den zwei Spulenträgern (14) angeordnet sind, wodurch aufgrund ihrer Magnetleitermaterialstruktur Flussverluste reduziert werden.

5. Wasch-/Trockenmaschine (1) nach den Ansprüchen 1 bis 4, **gekennzeichnet durch** einen Rotor (6), der ein oder mehrere Rotorjoche (10) umfasst, die aus einem stark magnetischen Material hergestellt sind, und auf denen der Rotormagnet (9) angeordnet ist.

6. Wasch-/Trockenmaschine (1) nach einem der Ansprüche 2 bis 5, **gekennzeichnet durch** Modellmagnete (11), die dieselbe Anzahl wie die Rotormagnete (9) aufweisen.

7. Wasch-/Trockenmaschine (1) nach einem der Ansprüche 2 bis 6, **gekennzeichnet durch** Modellmagnete (11) die in einer Anzahl benutzt werden, die ein ganzzahliges Vielfaches der Anzahl der Rotormagnete (9) und Phasen ist, und **durch** Rotormagnete (9).

## Revendications

1. Une machine à laver/sécher (1) comprenant
un tambour (3) dans lequel le linge à laver est placé et qui peut se déplacer en tournant autour d'un axe et qui a un arbre (8) lui permettant de tourner autour de son axe,
une cuve (2) dans laquelle le tambour (3) se déplace,
un moteur (4) qui a un stator (5) positionné sur la cuve (2) d'une manière appropriée à l'égard de la forme de la cuve (2) et, un rotor (6) positionné de manière à faire face au stator (5) à l'intérieur du champ magnétique à être créé entre eux, où le rotor (6) comprend un ou plusieurs aimants de rotor (9) sous une forme appropriée à l'égard de la forme du tambour (3) et de la cuve (2), et où l'aimant de rotor (9) est positionné sur ledit tambour (3) de telle sorte que un vide d'air égal ou à peu près égal est laissé entre le tambour (3) et la cuve (2) et
un module de contrôle moteur (7) au moyen duquel ledit moteur (4) est contrôlé,
**caractérisée par** un groupe d'aimant modèle (13) situé à l'extérieur de la cuve (2) et du tambour (3) de telle sorte qu'il n'est pas affecté par des conditions de travail telles que l'humidité et la température à l'intérieur de la cuve (2) et du tambour (3) et qu'il n'endommage pas l'utilisateur alors que le moteur (4) est en marche et, par lequel le positionnement des aimants de rotor (9) sur le tambour (3) est détecté et donc le moteur (4) est contrôlé.

2. Une machine à laver/sécher (1) selon la Revendication 1, **caractérisée par** des aimants modèles (11) qui sont positionnés sur la partie terminale de l'arbre (8), dont la partie terminale est à l'extérieur de la cuve (2) comme si elle est un modèle des aimants de rotor (9) adaptés à leur quantité et angle et, par laquelle les positions des aimants de rotor (9) situés sur le tambour (3) en mouvement sont déterminées.

3. Une machine à laver/sécher (1) selon les revendications 1 à 2, **caractérisée par** un ou plus d'un dispositif de détection (12) qui sont utilisés pour déterminer les positions des aimants de rotor (9) en détectant le positionnement des aimants modèles (11) et qui sont positionnés sur la cuve (2) de manière à détecter les aimants modèles (11) se déplaçant avec l'arbre (8).

4. Une machine à laver/sécher (1) selon les revendications 1 à 3, **caractérisée par** un stator (5) comprenant une ou plusieurs culasses statoriques (16) encerclant la cuve (2), plus d'une bobine (14) positionnée sur celles-ci de manière à couvrir ladite culasse statorique (16), des enroulements (17) avec le même nombre que des bobines (14), où les enroulements (17) sont formés par l'enroulement des fils conducteurs avec le nombre, la longueur et le diamètre corrects par rapport à la puissance désirée du moteur (4), autour le bobine (14) et, une ou plusieurs pièces intermédiaires statoriques (18) situées entre la culasse statorique (16) et la cuve (2) et entre les deux bobines (14) par lesquelles les pertes de flux sont réduites au moyen de sa structure magnétique de matériau conducteur.

5. Une machine à laver/sécher (1) selon les revendications 1 à 4, **caractérisée par** un rotor (6) qui comprend une ou plusieurs culasses rotoriques (10) constituées d'un matériau hautement magnétique sur lequel l'aimant de rotor (9) est positionné.

6. Une machine à laver/sécher (1) selon l'une quelconque des revendications 2 à 5, **caractérisée par** des aimants modèles (11) qui sont du même nombre que les aimants de rotor (9).

7. Une machine à laver/sécher (1) selon l'une quelconque des revendications 2 à 6, **caractérisée par** des aimants modèles (11) qui sont utilisés à un nombre de multiples entier du nombre des aimants et des phases de rotor (9) et par des aimants de rotor (9).
